# EUROPÄISCHE PATENTSCHRIFT

(11) **EP 2 509 883 B1**
(45) Veröffentlichungstag und Bekanntmachung des Hinweises auf die Patenterteilung: **22.03.2017**
(21) Anmeldenummer: 09768504.4
(22) Anmeldetag: 08.12.2009
(51) Int. Cl.: B65D 41/00, C08L 23/04, C08L 23/10, C08L 53/00

(54) **DICHTUNGSCOMPOUNDS MIT SCAVENGERMATERIALIEN KLEINER TEILCHENGRÖSSE**
SEALING COMPOUNDS WITH SCAVENGER MATERIALS OF SMALL PARTICLE SIZE
COMPOSÉS D'ÉTANCHÉITÉ PRÉSENTANT DES MATÉRIAUX INHIBITEURS DE FAIBLE GRANULOMÉTRIE

(43) Veröffentlichungstag der Anmeldung: 17.10.2012
(73) Patentinhaber: Actega DS GmbH, 28219 Bremen (DE)
(72) Erfinder: COULTER, William David, 3510 Konolfingen (CH); WITTENBERG, Rüdiger, 28865 Lilienthal (DE)
(74) Vertreter: Maiwald, Walter
(86) Internationale Anmeldenummer: PCT/EP2009/008766
(87) Internationale Veröffentlichungsnummer: WO 2011/069520

(56) Entgegenhaltungen:
- EP-A1- 0 328 336
- EP-A1- 0 328 337
- EP-A1- 1 050 556
- EP-A1- 1 116 747
- EP-A1- 1 816 086
- EP-A1- 1 894 974
- EP-A1- 2 058 379
- EP-A2- 0 250 057
- US-A- 5 060 818
- US-B2- 7 056 971
- ALAN RAWLE: 'BASIC PRINCIPLES OF PARTICLE SIZE ANALYSIS', [Online] 01 Januar 2008, XP055009141 Gefunden im Internet: <URL:http://www.rci.rutgers.edu/~moghe/PSD Basics.pdf> [gefunden am 2011-10-11]

## Beschreibung

Die Erfindung betrifft PVC-freie Polymercompounds für die Herstellung von scavenger-haltigen Dichtungen für Drehverschlüsse, insbesondere Drehkronenkorken ("twist crowns")
Sauerstoff-empfindliche Getränke und Lebensmittel haben weltweit eine große Markenbedeutung. An vorderster Stelle sind hier Bier, Fruchtsäfte und Tee-basierte Erfrischungsgetränke zu nennen. Um diese Füllgüter möglichst lange unverändert hinsichtlich Geschmack und Zusammensetzung aufbewahren zu können, hat die Verpackungsindustrie eine Reihe von Technologien entwickelt.
Bei traditionellen Flaschen mit Metallverschluss werden beispielsweise bevorzugt Barriere-Technologien, wie in EP-0503124 A1 beschrieben, eingesetzt. Daneben finden auch sauerstoffzehrende Verbindungen, wie in EP-0328337 B1 beschrieben, Verwendung. Beide Technologien werden für Dichtungsmassen von Kronkorken eingesetzt, sind aber bisher auf die Verwendung in sogenannten "pry-off" Kronkorken beschränkt.

Die US 5 060 818 A beschäftigt sich mit Dichtungseinlagen für Drehkronenkorken und deren Dichtmaterial, das eine eine Shore A Härte von 30-90 aufweisen soll. Beispielhafte Compounds enthalten SEBS, Weißöl und Polypropylen.

Im Falle von Flaschen aus PET und ähnlichen Kunststoffen, hingegen, wird mit Ein- oder Mehrschichtverbunden gearbeitet, die die Sauerstoffbarriere des PET erhöhen sollen. Gängige Polymere sind in diesen Fällen spezielle Polyamide oder auch Ethylenvinylalkoholpolymere (EVOH). Zusätzlich können auch hier in eine der Schichten sauerstoffzehrende Verbindungen eingebracht werden. Als Alternative mit einer passiven Barriere lassen sich in das Flascheninnere äußerst dünne Beschichtungen von Kohlenstoff oder Siliziumoxiden aufbringen.
Drehkronenkorken ("twist crowns") stellen gegenüber normalen Kronenkorken für den Verbraucher einen Vorteil dar, da Drehkronenkorken ohne Werkzeug geöffnet werden können. Für gewöhnlich werden diese Drehkronenkorken in der Industrie mit PVC-haltigen Compounds hergestellt, da nur so die strengen Anforderungen an die Dichtigkeit einerseits, die Öffnungskräfte andererseits sichergestellt werden können. Die Dichtigkeit muss die Leckage des Füllinhaltes und eine Kontamination des Füllinhaltes vermeiden. Es muss jedoch auch gewährleistet sein, dass sich der Füllbehälter zwar ohne allzu großen Kraftaufwand durch eine Drehbewegung des Drehkronenkorkens öffnen läßt, sich aber nicht unerwünscht öffnet. Als zusätzliche Anforderung an die Dichtung muß gewährleistet sein, daß das Öffnen und Schliessen beliebig of wiederholt werden kann, ohne einen Verlust der Dichtigkeit und/oder der Öffnungskräfte, hinnehmen zu müssen.

Es ist vorteilhaft solche Compounds für Dichtungen von Drehkronenkorken zu verwenden, die keine PVC Komponenten, sei es in der Form von PVC im Allgemeinen, sei es in der Form von Weich-PVC im besonderen, enthalten. Bei der üblichen Verbrennung von Haushaltsabfall, entstehen aus Halogenkunststoffen säurehaltige Gase, deren Entweichen in die Atmosphäre schädlich ist. Zudem stören schon geringe Mengen PVC das werkstoffliche Recycling von Kunststoffabfällen. Außerdem erfordern weiche, auf PVC-basierende Dichtungselemente den Einsatz von Weichmachern, die aus gesundheitlichen Gründen ebenfalls bedenklich sind.

Es besteht daher ein Bedarf für Drehkronenkorkenverschlüsse, die eine Dichtungseinlage auf Polymerbasis aufweisen und eine sauerstoffzehrende Komponente enthalten, welche aber nicht auf PVC basiert.

Bei all diesen Charakteristiken müssen die Dichtungen auch noch den vorher genannten Anforderungen hinsichtlich der eventuellen Migration chemischer Bestandteile entsprechen.

Es ist daher eine wesentliche Aufgabe der Erfindung eine zur Herstellung für Drehkronenkorkenverschlüsse geeignete Dichtungseinlage anzugeben, welche es ermöglicht, den Gefäßverschluss mit einem Dichtungselement auf Polymerbasis zu versehen, welches eine sauerstoffzehrende Komponente hat, kein PVC enthält und außerdem den gesetzlichen Vorschriften hinsichtlich der Migration von Verpackungskomponenten entspricht, sowie auch die Richtlinien hinsichtlich einer Prüfung auf Fremdgeschmack erfüllt.
Die erfindungsgemäße Rezeptur ermöglicht die Herstellung von Drehkronenkorken, welche einerseits den Anforderungen an Dichtigkeit und Öffnungskräften genügen und andererseits eine sauerstoffzehrende Komponente enthalten, ohne dabei jedoch aus PVC zu bestehen.
Zur Lösung dieser und anderer Aufgaben ist eine erfindungsgemäße Dichtungseinlage für Drehkronenkorken mit den Merkmalen ausgestattet, die im Anspruch 1 definiert sind. Vorteilhafte Ausgestaltungen sind in den Unteransprüchen definiert.

Wir haben überraschend herausgefunden, dass bestimmte Compounds bei einer geeigneten Shore-A Härte, und basierend aufTPE, Polyolefin und Weißöl, die genannten Anforderungen besonders gut erfüllen.

Wir haben weiterhin herausgefunden, dass Stoffe wie zum Beispiel Ascorbinsäure und andere im Stand der Technik bekannten Verbindungen dazu geeignet sind, sich als ein geeignetes Additiv zur Schaffung einer Sauerstoffbarriere für Drehkronenkorken verwenden lassen und sich die sauerstoffzehrende Funktionalität somit optimieren lässt. Zudem haben wir herausgefunden, dass Sulfite, vor allem aber Metallsulfite, insbesondere aber Natriumsulfit als geeignetes Additiv zur Schaffung der oben genannten Sauerstoffbarriere für Drehkronenkorken ist.

Ein Compound für eine Drehkronenkorkendichtung, dem Sulfit als sauerstoffzehrende Komponent beigemischt wurde, muss natürlich auch den entsprechenden Normen, z.B. bezüglich einer Prüfung auf Fremdgeschmack gemäß der DIN 10950, entsprechen, wie auch beschrieben im "Leitfaden Verschlüsse" der Arbeitsgruppe Verpackungstechnik im TWA der VLB Berlin (Berlin, März 2009).

Wir haben festgestellt, dass sich die Funktionalität der sauerstoffzehrenden Komponente (insbesondere des Sulfits) mittels der mittleren Partikelgröße steuern lässt. Durch das mit der verringerten Partikelgröße einhergehende Vergrößern der inneren Oberfläche, wird auch die Verfügbarkeit von aktivem Agens (z.B. Natriumsulfit) erhöht, da das nach der Reaktion an der Aussenseite des Scavengerpartikels vorliegende Natriumsulfat eine Diffusionsbarriere für weiteren Sauerstoff darstellt und somit die Barrierewirkung erhöht. Damit können die notwendigen Mengen an Additiv minimiert werden. Die Aktivität der Scavengenpartikel kann über verschiedene Zusätze modifiziert werden, wie auch in dem Patent EP-1050556 B1 beschrieben.

Die erfindungsgemäßen Polymercompounds für die Drehkronenkorkendichtungen erreichen außerdem die Verminderung des Sauerstoffeintrages im Vergleich zu einem Scavenger-freien Referenzmaterial. Der Sauerstoffeintrag in das Füllgut wurde nach der "total package oxygen" Methode (Orbisphere Technologie) bestimmt. Hierzu werden Flaschen in einer Glove-Box mit einem Bier-Simulans (in Bezug auf pH-Wert und CO₂-Gehalt) befüllt und der Gesamtsauerstoffgehlt zerstörungsfrei gemessen. Auch nach 150 Tagen können Einträge von weniger als 0,4 ppm Sauerstoff erreicht werden. Bei Bier wird üblicherweise von einem sauerstoffbedingten Geschmackseinfluss ab Konzentrationen von 1 ppm gesprochen. Im Vergleich zum Scavenger-freiem Referenzmaterial kann so eine Verminderung des Sauerstoffeintrages um mindestens den Faktor 3 erreicht werden.

Bei den hier beschriebenen Drehkronenkorkenverschlüssen ist das Dichtungselement in ähnlicher Weise als Einlage auf der Innenfläche des Gefäßverschlusses ausgebildet, wie dies bei den bekannten PVC-haltigen Drehkronenkorken auch der Fall ist.
Die erfindungsgemäße Rezeptur ermöglicht die Herstellung von PVC freien Dichtungsmassen für Drehkronenkorken, welche mit mindestens einer sauerstoffzehrenden Komponente ausgerüstet ist.

Außerdem ermöglicht die erfindungsgemäße Rezeptur die Herstellung einer Dichtungsmasse für Drehkronenkorken, die mittels chemischer oder physikalischer Treibmittel geschäumt werden kann.

In erfindungsgemäßen Rezepturen enthält das Compound zwischen 2% bis 20% Copolymer, bestehend aus Polypropylen (PP) und Polyethylen (PE), vorzugsweise enthält das Material zwischen 5% bis 15% Copolymer.

In erfindungsgemäßen Rezepturen enthält das Compound zwischen 5% bis 25% Polyethylen (Low Density Polyethylen, LDPE), vorzugsweise enthält das Material zwischen 10% bis 20% LDPE.
In anderen bevorzugten Ausführungsformen enthält das Compound nicht mehr als 10%, vorzugsweise nicht mehr als 7%, insbesondere nicht mehr als 4% und besonders bevorzugt nicht mehr als 1% von Gleitmitteln.

In erfindungsgemäßen Rezepturen enthält das Compound zwischen 10% bis 40% Thermoplastische Elastomere basierend auf Styrol-Ethylen-Butylen-Styrol (SEBS), besonders bevorzugt enthält das Material zwischen 20% bis 30% von TPE basierend auf SEBS.
Vorzugsweise enthält das Compound zwischen 20% bis 45% Medizinisches Weißöl, besonders bevorzugt enthält das Material zwischen 30% bis 40% Medizinisches Weißöl.

In erfindungsgemäßen Rezepturen enthält das Compound zwischen 10% bis 30% Polyethylen (Linear Low Density Polyethylen, LLDPE), vorzugsweise enthält das Material zwischen 15% bis 25% LLDPE. In bevorzugten Ausführungsformen enthält das Compound zwischen 1% bis 10% Natriumsulfit, vorzugsweise enthält das Material von 4% bis 8% Natriumsulfit.
In anderen bevorzugten Ausführungsformen enthält das Compound zwischen 20% und 100% wenigstens eines Block-Copolymers, wobei das Block-Copolymer vorzugsweise ein Interpolymer von Ethylen mit mindestens einem C₃-C₂₀-alpha-Olefin oder ein Copolymer von Ethylen mit einem C₃-C₂₀-alpha-Olefin oder ein Ethylen mit einem C₃-C₂₀-alpha-Olefin gegebenenfalls in Kombination mit anderen ungesättigten Monomeren ist.
Weiterhin wird bevorzugt, dass das Material der Dichtungseinlage keine Weichmacher enthält.
Erfindungsgemäß hat das genannte Material eine Shore A-Härte von 50-90, bevorzugt von 60-80 und besonders bevorzugt von 65-76.

Erfindungsgemäß weisen die Polymercompounds beim Druckverformungstest analog ASTM D395-97 Methode B nach 22 Stunden Lagerung bei 70 °C und einer Kompression von 25%, einen Druckverformungsrest (DVR) zwischen 30% und 90%, bevorzugt von 30% und 60% und besonders bevorzugt von 40% bis 50%, auf.
Erfindungsgemäß ist die mittlere Partikelgröße des Natriumsulfits kleiner als 20 µm, bevorzugt kleiner als 12 µm und besonders bevorzugt kleiner als 7 µm, eingestellt.
Erfindungsgemäß soll die Einstellung der Polymercompounds für die Drehkronenkorkendichtungen so erfolgen, daß gleichmäßige, niedrige Öffnungswerte im Bereich von 0,678 Nm (6 Ibf in) bis 1,130 Nm (10 lbf in) mit einem Zielwert von 0,791 Nm (7 lbf in), gemäß der Arbeitsgruppe Verpackungstechnik im TWA der VLB Berlin, erreicht werden.

Die erfindungsgemäßen Polymercompounds für Drekronenkorkendichtungen können eine Druckhaltung von mehr als 8 bar, nach Pasteurisation, zeigen (bestimmt auf Secure Seal Tester der Fa. Secure Pak).
Es ist anzumerken, dass die Parameter der Öffnungskräfte, wie auch Druckerhaltung und Sauerstoffeintrag, von der Weite der Flaschenmündung und dem gegebenenfalls vorgesehenen Dichtungsprofil abhängig sind.
Wahlweise können der Rezeptur des Compounds Pigmente zugesetzt werden.

Es hat sich gezeigt, dass dem Polymercompound andere Additive wie Wachse und Silikone zugesetzt werden können, um z.B. die Verarbeitung und die Gebrauchseigenschaften zu verbessern.

Eine beispielhafte Rezeptur umfasst:

| | |
|---|---|
| PE/PP Copolymer: | 8% |
| LDPE Polyethylen: | 10% |
| Erucasäureamid: | 0,5% |
| Stabilisator: | 0,1% |
| Antioxidans: | 0,1% |
| SEBS (gebundener Styrolanteil 31 %): | 25% |
| Weißöl: | 34% |
| Natriumsulfit (wasserfrei): | 6% |
| LLDPE Polyethylen: | 16,3% |

### Beispiele

Der Sauerstoffeintrag wurde nach der "total oxgen" Methode (Orbisphere Technologie bestimmt. Hierzu werden Flaschen in einer Glove-Box mit einem Bier-Simulans (in Bezug auf pH-Wert und CO₂-Gehalt) befüllt und der Gesamtsauerstoffgehalt zerstörungsfrei gemessen.

"Total package Oxygen (ppm)" bedeutet hierbei die Gesamtkonzentration von Sauerstoff im Füllbehälter (Flasche).

"Pasteurisiert" bedeutet, dass das Bier-Simulans vor Verschluss pasteurisiert worden ist.

| Actega PVC-freier Sauerstofftest von Miller Twist-off Flaschen (US) mit und ohne Pasteurisation | | | | |
|---|---|---|---|---|
| Tage | A [ppm] | B [ppm] | C [ppm] | D [ppm] |
| 6 | 0,097 | 0,051 | 0,086 | 0,051 |
| 26 | 0,220 | 0,098 | 0,215 | 0,132 |
| 53 | 0,247 | 0,158 | 0,265 | 0,141 |
| 94 | 0,614 | 0,253 | 0,689 | 0,306 |
| 146 | 1,130 | 0,309 | 1,231 | 0,298 |
| 181 | 1,244 | 0,218 | 1,493 | 0,325 |

| | | | | |
|---|---|---|---|---|
| A: Svelon TC VP 642394 white B: Svelon TC VP 849189 T/A C: Svelon TC VP 642394 white - pasteurisiert D: Svelon TC VP 849189 T/A - pasteurisiert Svelon TC VP 642394 white enthält kein Natriumsulfit / Svelon TC VP 849189 T/A enthält Natriumsulfit, die stoffliche Zusammensetzung ist sonst identisch Bei allen Experimenten wurde die gleiche Stoffmenge von Svelon TC VP 642394 white/Svelon TC VP 849189 T/A eingesetzt | | | | |

## Patentansprüche

1. Drehkronenkorken mit einer PVC-freien Dichtungseinlage, die ein Polymercompound umfasst, welches mit mindestens einer sauerstoffzehrenden Verbindung ausgerüstet ist, **dadurch gekennzeichnet, dass** die Shore A Härte des Polymercompounds zwischen 50 und 90 liegt und das Polymercompound beim Druckverformungstest analog ASTM D395-97 Methode B nach 22 Stunden Lagerung bei 70 °C und einer Kompression von 25 % einen Druckverformungsrest (DVR) zwischen 30 % und 90 % aufweist, und so zusammen gesetzt ist, dass das Compound eine Kombination von TPE, Polyolefin und Weißöl umfasst, wobei das Compound zwischen 10 % bis 40 % Thermoplastische Elastomere basierend auf Styrol-Ethylen-Butylen-Styrol (SEBS) sowie
2 % bis 20 % Copolymer, bestehend aus Polypropylen (PP) und Polyethylen und/
5 % bis 25 % Low Density Polyethylen (LDPE) und/ 10 % bis 30 % Linear Low Density Polyethylen (LLDPE) enthält.

2. Drehkronenkorken nach Anspruch 1, **dadurch gekennzeichnet, dass** das Compound eine Shore A Härte von 60 - 80 und bevorzugt von 65 - 76 hat.

3. Drehkronenkorken nach Anspruch 1 oder 2, **dadurch gekennzeichnet, dass** das Compound Natriumsulfit als sauerstoffzehrende Verbindung mit einer mittleren Partikelgröße kleiner als 20 µm, bevorzugt einer mittleren Partikelgröße kleiner als 12 (µm und besonders bevorzugt einer mittleren Partikelgröße kleiner als 7 µm, enthält.

4. Drehkronenkorken nach Ansprüchen 1 bis 3, **dadurch gekennzeichnet, dass** das Compound einen Druckverformungsrest, nach 22 Stunden Lagerung bei 70 °C und einer Kompression von 25 %, zwischen 20 % und 80 %, bevorzugt von 30 % bis 60 % und besonders bevorzugt von 40 % bis 50 %, aufweist.

5. Drehkronenkorken nach Ansprüchen 1 bis 4, **dadurch gekennzeichnet, dass** das Compound 5 % bis 15 % Copolymer, bestehend aus Polypropylen (PP) und Polyethylen (PE), enthält.

6. Drehkronenkorken nach Ansprüchen 1 bis 5, **dadurch gekennzeichnet, dass** das Compound 10 % bis 20 % LDPE enthält.

7. Drehkronenkorken nach Ansprüchen 1 bis 6, **dadurch gekennzeichnet, dass** das Compound nicht mehr als 10 %, vorzugsweise nicht mehr als 7 %, insbesondere nicht mehr als 4 % und besonders bevorzugt nicht mehr als 1 % von Gleitmitteln, enthält.

8. Drehkronenkorken nach Ansprüchen 1 bis 7, **dadurch gekennzeichnet, dass** das Compound 20 % bis 30 % von TPE basierend auf SEBS (gebundener Styrolanteil 31 %), enthält.

9. Drehkronenkorken nach Ansprüchen 1 bis 8, **dadurch gekennzeichnet, dass** das Compound 20 % bis 45 % Medizinisches Weißöl, vorzugsweise zwischen 30 % und 40 % Medizinisches Weißöl, enthält.

10. Drehkronenkorken nach Ansprüchen 1 bis 9, **dadurch gekennzeichnet, dass** das Compound 15 % bis 25 % LLDPE enthält.

11. Drehkronenkorken nach Anspruch 1, **dadurch gekennzeichnet, dass** das Compound wenigstens 20 % wenigstens eines Block-Copolymers enthält, wobei das Block-Copolymer vorzugsweise ein Interpolymer von Ethylen mit mindestens einem C₃-C₂₀-alpha-Olefin oder ein Copolymer von Ethylen mit einem C₃-C₂₀-alpha-Olefin, gegebenenfalls in Kombination mit anderen ungesättigten Monomeren, ist.

12. Drehkronenkorken nach einem der Ansprüche 1 bis 11, **dadurch gekennzeichnet, dass** das Compound Additive wie Wachse und Silikone enthält.

13. Drehkronenkorken gemäß Ansprüchen 1 bis 12, **dadurch gekennzeichnet, dass** das Compound mittels chemischer oder physikalischer Treibmittel geschäumt werden kann.

## Claims

1. Twist crown corks with a PVC-free sealing insert comprising a polymer compound furnished with at least one oxygen-consuming compound,
**characterized in that**
the Shore A hardness of the polymer compound is between 50 and 90, and the polymer compound has a compression set (CS) between 30% and 90% in the compression set test according to ASTM D395-97 method B after 22 hours of storage at 70°C and a compression of 25%, and it has a composition such that the compound comprises a combination of TPE, polyolefin and white oil, wherein the compound contains between 10% and 40% thermoplastic elastomer, based on styrene-ethylene-butylene-styrene (SEBS), and
2% to 20% copolymer, consisting of polypropylene (PP) and polyethylene (PE), and
5% to 25% low-density polyethylene (LDPE) and
10% to 30% linear low-density polyethylene (LLDPE).

2. The twist crown corks according to claim 1,
**characterized in that**
the compound has a Shore A hardness of 60-80, preferably of 65-76.

3. The twist crown corks according to claim 1 or 2,
**characterized in that**
the compound contains sodium sulfite as an oxygen-consuming compound with an average particle size of less than 20 µm, preferably an average particle size of less than 12 µm and especially preferably an average particle size of less than 7 µm.

4. The twist crown corks according to claim 1 to 3,
**characterized in that**
after 22 hours of storage at 70°C and a compression of 25%, the compound has a compression set between 20% and 80%, preferably 30% to 60% and especially preferably from 40% to 50%.

5. The twist crown corks according to claim 1 to 4,
**characterized in that**
the compound contains 5% to 15% copolymer consisting of polypropylene (PP) and polyethylene (PE).

6. The twist crown corks according to claim 1 to 5,
**characterized in that**
the compound contains 10% to 20% LDPE.

7. The twist crown corks according to claim 1 to 6,
**characterized in that**
the compound contains no more than 10%, preferably no more than 7%, in particular no more than 4% and especially preferably no more than 1% of lubricants.

8. The twist crown corks according to claim 1 to 7,
**characterized in that**
the compound contains 20% to 30% of TPE based on SEBS (bound styrene content 31%).

9. The twist crown corks according to claim 1 to 8,
**characterized in that**
the compound contains 20% to 45% medicinal white oil, preferably between 30% and 40% medicinal white oil.

10. The twist crown corks according to claim 1 to 9,
**characterized in that**
the compound contains 15% to 25% LLDPE.

11. The twist crown corks according to claim 1,
**characterized in that**
the compound contains at least 20% of at least one block copolymer wherein the block copolymer is preferably an interpolymer of ethylene with at least one C₃-C₂₀-alpha-olefin or a copolymer of ethylene with a C₃-C₂₀-alpha-olefin, optionally in combination with other unsaturated monomers.

12. The twist crown corks according to any one of claims 1 to 11,
**characterized in that**
the compound contains additives such as waxes and silicones.

13. The twist crown corks according to any one of claims 1 to 12,
**characterized in that**
the compound may be foamed by means of chemical or physical blowing agents.

## Revendications

1. Capsule à visser avec un insert d'étanchéité exempt de PVC, qui comprend un composite polymère, lequel est doté d'au moins un composé apte à diminuer l'oxygène, **caractérisée en ce que** la dureté Shore A du composite polymère se situe entre 50 et 90 et lors d'un essai de déformation sous pression analogue à ASTM D395-97, méthode B, après un stockage de 22 heures à 70 °C et une compression de 25 %, les composite polymère présente une déformation rémanente (EP) comprise entre 30 % et 90 % et est composé de telle sorte que le composite comprend une association d'un TPE, d'un polyoléfine et d'huile blanche, le composite contenant de 10 % à 40 % d'élastomères thermoplastiques basés sur du styrène-éthylène-butylène-styrène (SEBS), ainsi que
de 2 % à 20 % d'un copolymère constitué de polypropylène (PP) et de polyéthylène et
de 5 % à 25 % de Low Density Polyethylen (LDPE) et
de 10 % à 30 % de Linear Low Density Polyethylen (LLDPE).

2. Capsule à visser selon la revendication 1, **caractérisée en ce que** le composite présente une dureté Shore A de 60 à 80 et de préférence de 65 à 76.

3. Capsule à visser selon la revendication 1 ou la revendication 2, **caractérisée en ce que** le composite contient du sulfure de sodium en tant que composé diminuant l'oxygène, avec une taille moyenne des particules inférieure à 20 µm, de préférence une taille moyenne des particules inférieure à 12 µm et de manière particulièrement préférée, une taille moyenne des particules inférieure à 7 µm.

4. Capsule à visser selon les revendications 1 à 3, **caractérisée en ce qu'**après un stockage de 22 heures à 70 °C et une compression de 25 %, le composé présente une déformation rémanente comprise entre 20 % et 80 %, de préférence de 30 % à 60 % et de manière particulièrement préférée de 40 % à 50 %.

5. Capsule à visser selon les revendications 1 à 4, **caractérisée en ce que** le composite contient de 5 % à 15 % d'un copolymère, constitué de polypropylène (PP) et de polyéthylène (PE).

6. Capsule à visser selon les revendications 1 à 5, **caractérisée en ce que** le composite contient de 10 % à 20 % de LDPE.

7. Capsule à visser selon les revendications 1 à 6, **caractérisée en ce que** le composite ne contient pas plus de 10 %, de préférence pas plus de 7 %, particulièrement pas plus de 4 % et de manière particulièrement préférée, pas plus de 1 % d'agents antifriction.

8. Capsule à visser selon les revendications 1 à 7, **caractérisée en ce que** le composite contient de 20 % à 30 % de TPE, basé sur du SEBS (part de styrène lié de 31 %).

9. Capsule à visser selon les revendications 1 à 8, **caractérisée en ce que** le composite contient de 20 % à 45 % d'huile blanche médicale, de préférence entre 30 % et 40 % d'huile blanche médicale.

10. Capsule à visser selon les revendications 1 à 9, **caractérisée en ce que** le composite contient de 15 % à 25 % de LLDPE.

11. Capsule à visser selon la revendication 1, **caractérisée en ce que** le composite contient au moins 20 % d'au moins un copolymère séquencé, le copolymère séquencé étant de préférence un interpolymère d'éthylène avec au moins un alpha-oléfine en C₃ à C₂₀ ou un copolymère d'éthylène avec un alpha-oléfine en C₃ à C₂₀, le cas échéant en association avec d'autres monomères insaturés.

12. Capsule à visser selon l'une quelconque des revendications 1 à 11, **caractérisée en ce que** le composite contient des additifs, comme des cires et des silicones.

13. Capsule à visser selon les revendications 1 à 12, **caractérisée en ce qu'**on peut mousser le composite à l'aide d'agents propulseurs chimiques ou physiques.
